# EUROPEAN PATENT APPLICATION

(11) **EP 2 129 033 A1**
(43) Date of publication of application: **02.12.2009**
(21) Application number: 08734220.0
(22) Date of filing: 30.04.2008
(51) Int. Cl.: H04L 1/16

(54) **A POLLING METHOD, SYSTEM AND DEVICE**

(30) Priority: 30.04.2007 CN 200710101575
(71) Applicant: Huawei Technologies Co., Ltd., Longgang District, Shenzhen Guangdong 518129 (CN)
(72) Inventor: ZHOU, Zheng, Shenzhen Guangdong 518129 (CN); FANG, Ming, Shenzhen Guangdong 518129 (CN)
(74) Representative: Barth, Stephan Manuel
(86) International application number: PCT/CN2008/070864
(87) International publication number: WO 2008/134984

(57) **Abstract**

A polling method disclosed in an embodiment of the present invention includes: a mobile terminal receives a polling request about the downlink data receiving state sent by the network device, where the polling request carries control information on the start location and reporting mode of the downlink data receiving state reported by the mobile terminal; and the mobile terminal reports the receiving state of the part required by the polling request to the network device according to the reporting mode required by the network device. A polling system, mobile terminal and network device are disclosed herein. In the embodiments, the network device may control the mobile terminal to report through a PAN message; meanwhile, another option is reserved, namely, the mobile terminal may report the downlink data receiving state through a packet data downlink ACK/NACK message that carries an NPB. Therefore, compared to the techniques known in the art, the technical solution disclosed by the embodiments of the present invention works properly in the case of both great windows and small windows, and provides higher flexibility and higher efficiency in utilizing the radio interface.

## Description

### FIELD

The present invention relates to wireless communication, and more specifically to a polling method, system and device.

### BACKGROUND

An Enhanced Data rates for GSM Evolution (EDGE) is a data-enhancing mobile communication technology based on Global System for Mobile communications (GSM) or General Packet Radio Service (GPRS) networks. The EDGE is also known as a 2.75G technology. This technology can use broadband services, and enables the network using a band of 800 MHz, 900 MHz, 1800 MHz or 1900 MHz to provide partial functions of the 3^{rd} Generation (3G) mobile communication network. The EDGE shares a core network with the Universal Mobile Telecommunications System (UMTS). By introducing an Iu interface, the radio access network of GSM or EDGE evolves to a GSM EDGE Radio Access Network (GERAN).

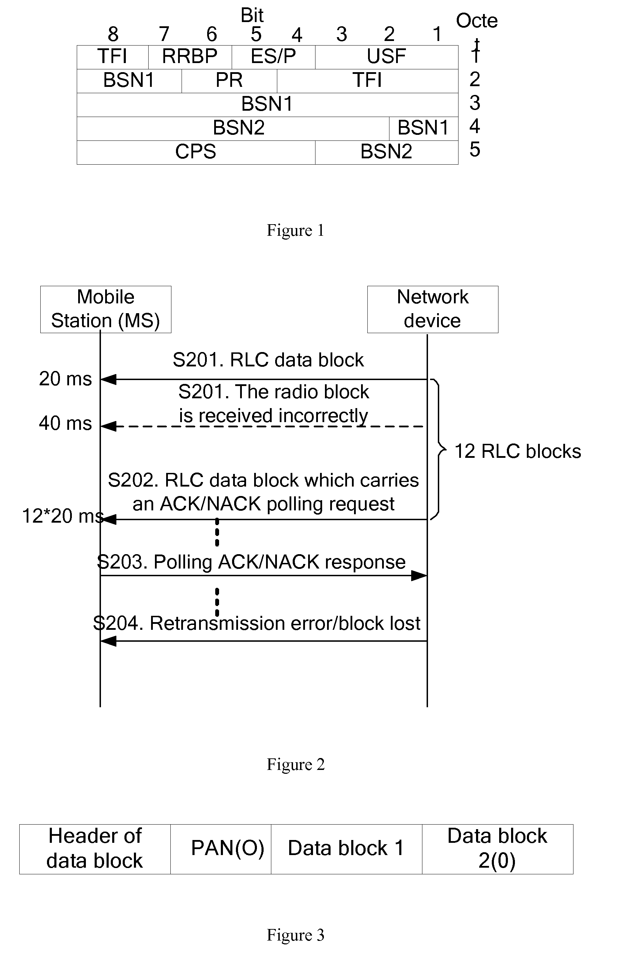

In the EDGE, each Logic Link Control (LLC) in the upper layer is composed of a number of Radio Link Control (RLC) blocks, as shown in Figure 1. Each RLC data block has a Block Sequence Number (BSN) and is transmitted according to the sequence of the BSN. A radio block is a basic unit of radio resource allocation and radio transmission. Each radio block consists of 4 timeslots, which timeslots are located in 4 consecutive Time Division Multiple Access (TDMA) frames respectively. The transmission of the RLC data block is conveyed by radio blocks. Due to different coding formats, each radio block may convey at most 2 RLC data blocks. In order to optimize the data transmission in the Packet Switched (PS) mode, the RLC data block transmission is controlled by the Automatic Repeat reQuest (ARQ) mechanism under the RLC or Media Access Control (MAC) confirmation mode. Through polling, the mobile terminal such as a Mobile Station (MS) reports the relevant downlink state and the successfully received RLC data block information. The polling mechanism is applicable only to the downlink data transmission. A polling request is transmitted under the control of a Packet Control Unit (PCU). A transmitting network device uses a sending window to address the RLC data block. In the sending window, a RLC data block is denoted as being in an "unsent" state, a "pending acknowledgement" state, a "correctly received" state or an "incorrectly received" state. If an RLC data block has not been sent, the RLC data block is denoted as being in the "unsent" state; once the RLC data block is transmitted, it is denoted as being in the "pending acknowledgement" state. After an ACK (positive acknowledgement) or NACK (negative acknowledgement) message is received from the MS's downlink packet, it is evident as to whether the previously sent RLC data block is received by the MS correctly, and the sending window is updated accordingly. If the RLC data block is received correctly, the RLC data block is denoted as being in the correctly received (ACK) state; if the RLC data block is received incorrectly or lost, the RLC data block is denoted as being in the incorrectly received or lost (NACK) state. If no acknowledgement is received, the "pending acknowledgement" state maintains. After the sending window is updated, the window slides to the first unacknowledged RLC data block.

The polling frequency is adaptively adjusted according to the state of the radio link. When the Block Error Ratio (BLER) rises, the PCU in the network device increases the polling frequency. Conversely, the PCU in the network device decreases the polling frequency. Moreover, the polling also depends on the scheduling frequency of RLC data blocks. Figure 2 shows a polling process under the ARQ mechanism supposing that the polling interval is 12 RLC data blocks. The process includes the following steps:

Step s201: The network device sends an RLC data block to the MS, wherein the RLC data block includes 4 radio blocks, and some of the radio blocks may be lost or incorrectly transmitted.

Step s202: At the end of an interval of 12 RLC data blocks, the network device sends an RLC data block to the MS, wherein the RLC data block includes an ACK/NACK polling request.

Step s203: The MS sends a polling ACK/NACK message to the network device, and consequently the network device knows the downlink channel's quality and the receiving state of the RLC data block sent from the network device.

Step s204: The network device retransmits the erroneous or lost block to the MS.

The RLC layer of the MS encapsulates RLC data blocks into a package and reports the package to its local upper layer only after all RLC data blocks of a LLC frame are collected. After the network device passes the polling, the MS knows whether all downlink RLC data blocks are received correctly by polling the ACK/NACK message. The polling occurs at intervals. When a block is lost or erroneous, the network does not detect and retransmit the erroneous or lost block until the polling occurs and the MS reports the ACK/NACK message to the network. In practice, it takes about 150-250 ms for the PCU to detect the erroneous or lost block, thus generating a significant transmission delay.

Apart from obtaining the above-mentioned information from a MS receiving downlink data blocks, polling is also periodically required, for example 480ms, to obtain a measurement report on the link quality of the MS. The measurement report is also included in the packet downlink ACK/NACK message. The polling is set through an "ES/P" field in the RLC/MAC block's header. The "ES/P" field identifier and the corresponding feedback request are described in Table 1:

**Table 1**

| ES/P | Feedback request description (poll) |
|---|---|
| 00 | Meaningless (the RRBP field is invalid) |
| 01 | The EGPRS PACKET DOWNLINK ACK/NACK message carries an FPB. If there is any free space left, the message carries a measurement report. |
| 10 | The EGPRS PACKET DOWNLINK ACK/NACK message carries an NPB. If there is any free space left, the message carries a measurement report. |
| 11 | The EGPRS PACKET DOWNLINK ACK/NACK message carries a channel quality report. If there is any free space left, the message carries an NPB. |

The Relative Reserved Block Period (RRBP) field indicates that when the MS receives the poll, the network device reserves resources for sending the ACK/NACK message for the MS. Upon expiry of the period specified by the RRBP field, the MS may stop monitoring the Uplink State Flag (USF) and send the message directly because the network has allocated the data block resources in the RRBP field in this period to the MS.

In a GERAN, the maximum size of both a sending window and a receiving window of the network device 1024, and the length of each control message is 181 bits. Disregarding the packet header overhead, the free space available to the bitmap in a packet downlink ACK/NACK message is about 128 bits. If the size of the receiving window exceeds the maximum value of the bitmap carried by a control message and a control message is unable to carry a whole window, the window needs to be reported in segments. Therefore, the network device controls the location of the window reported by the MS by differentiating between polling First Partial Bitmap (FPB) and polling Next Partial Bitmap (NPB), and consequently obtains the information on receiving the whole window.

The frequency of reporting the MS measurement reports required by the network is less than the frequency of the MS feeding back the bitmap required by the network, and too frequent measurement reports are of no practical significance. In addition, the measurement report occupies over half of the space in the ACK/NACK message, which reduces the ACK/NACK message's efficiency in carrying the bitmap. Therefore, it is not necessary for the MS to feed back a measurement report at each poll.

In order for the network device to quickly know the information on receiving the data block, a Fast ACK/NACK Report (FANR) mechanism is used as a supplement to the polling mechanism. In contrast to the traditional ACK/NACK mechanism, in order to respond to the network device quickly the Fast ACK/NACK mechanism sends the ACK/NACK information together with the data block in one RLC/MAC block rather than sending a response through a traditional ACK/ACK message. Such an ACK/NACK message is called a Piggybacked ACK/NACK (PAN). Therefore, a radio block embedded into a PAN includes three parts: data block header (RLC/MAC Header), PAN, and data load (RLC data block), where letter O represents "optional", as shown in Figure 3.

In a new structure, the PAN is optional. The block header indicates whether the RLC data block includes a PAN. The RLC data block may have one or two Modulation and Coding Scheme (MCS7-9) blocks.

The length of a PAN is fixed to 24 bits. Each RLC data block may include a PAN. The structure of a PAN is shown in Table 2:

**Table 2**

| Name | Length [bits] | Description |
|---|---|---|
| Addr | 5 | TFI of TBF corresponding to the acknowledgement message carried in the PAN 5 |
| BoW | 1 | Start of the receiving window 0: SSN represents the oldest RLC data block not received 1: SSN represents start of reporting data blocks, before which no data block is received 10 |
| SSN | 7 - 11 | Starting sequence number of the bitmap |
| BM | remaining bits (variable length) | Information about receiving the data blocks that begin with SSN+1 (0-NACK/1-ACK) Length of BM (bitmap) = length of PAN - length of address - length of SSN - 1 15 |

With the introduction of the FANR, the original polling mechanism is changed. On the basis of the original polling mechanism, the Fast ACK/NACK mechanism controlled by a network is added. That is, the network polls the MS, and the MS may reply with the Fast ACK/NACK message which is also known as PAN. The original polling mechanism shown in Table 1 has only three options: If ES/P is 01, it indicates that the EGPRS PACKET DOWNLINK ACK/NACK message includes an FPB; if ES/P is 10, it indicates that the EGPRS PACKET DOWNLINK ACK/NACK message includes an NPB; if ES/P is 11, it indicates that the EGPRS PACKET DOWNLINK ACK/NACK message includes a channel quality measurement report; if there is any free space left, the message includes an NPB). Because the polling needs to periodically report link quality measurement reports, the third option which reports both the NPB and the measurement report must be reserved and the second option (polling NPB) is changed to the Fast ACK/NACK (namely, polling the FPB of the PAN type) controlled by a network. The changed polling mechanism is shown in Table 3:

**Table 3**

| ES/P | Feedback request (poll) description |
|---|---|
| 00 | None |
| 01 | The EGPRS PACKET DOWNLINK ACK/NACK message carries an FPB. If any free space is left, the message carries a measurement report. |
| 10 | Polling fast ACK/NACK message (poll for PAN) FPB |
| 11 | The EGPRS PACKET DOWNLINK ACK/NACK message carries a channel quality report. If any free space is left, the message carries an NPB. |

A bit in the RRBP field may be used to indicate whether the data block includes a PAN. If one bit in the RRBP field is valid, two reaction times are optional.

In the process of researching the present invention, the inventor finds that in the original polling mechanism, one FPB and one NPB are enough to report the whole window. In the above-mentioned technical solution known in the prior art, because option 10 shown in Table 1, which option means if there is any free space left after the NPB is reported, the message includes a measurement report", is removed, according to the modified Table 3 the NPB can only be reported by reporting the measurement report first and then including the bitmap, which means that the bitmap included in each ACK/NACK message is at least less than half of the bitmap in the previous option of reporting the NPB first. Previously, one message is enough for sending. In the prior art, however, a message including the bitmap and two or more measurement reports are required. Therefore, the technical solution in the prior art considerably reduces the transmission efficiency.

### SUMMARY

A polling method, system and device are provided in embodiments of the present invention to improve transmission efficiency.

A polling method provided in an embodiment of the present invention includes:
receiving a polling request sent by the network device, the polling request having control information for instructing a mobile terminal a start location and reporting mode of the downlink data receiving state to be reported to the network device by the mobile terminal, wherein the reporting mode includes: reporting through a packet data downlink ACK/NACK message, and reporting through a Piggybacked ACK/NACK (PAN) message; and
sending, according to the report mode indicated in the polling request, the network device a downlink data receiving state corresponding to the start location indicated in the polling request.

A polling system provided in an embodiment of the present invention includes:
a network device, adapted to send a polling request to the mobile terminal, the polling request comprising control information for instructing a mobile terminal a start location and reporting mode of the downlink data receiving state to be reported to be the network device by the mobile terminal, wherein the reporting mode includes: reporting through a packet data downlink ACK/NACK message or reporting through a PAN message; and
a mobile terminal, adapted to send, according to the report mode indicated in the polling request, the network device a downlink data receiving state corresponding to the start location indicated in the polling request.

A network device provided in an embodiment of the present invention includes:
a poll setting unit, adapted to set the polling request of the downlink data receiving state, the polling request comprising the control information to instruct a mobile terminal a start location and a reporting mode of the downlink data receiving state to be reported to the network device by the mobile terminal; and
a poll sending unit, adapted to send a polling request to the mobile terminal.

A mobile terminal provided in an embodiment of the present invention includes:
a poll receiving unit, adapted to receive the polling request of the downlink data receiving state from the network device; and
an information reporting unit, adapted to send, according to a report mode indicated in the polling request, the network device a downlink data receiving state corresponding to the start location indicated in the polling request.

Another polling method provided in an embodiment of the present invention includes:
receiving the polling request sent by the network device, where the polling request comprises this control information: reporting the FPB through a PAN message, reporting the FPB through a packet data downlink ACK/NACK message, reporting the NPB through a packet data downlink ACK/NACK message, or reporting the channel quality report that carries an NPB through packet downlink data; and
reporting, according to the control information, the downlink data receiving state to the network device.

Another polling method provided in an embodiment of the present invention includes:
receiving, by a mobile terminal, a polling request about the downlink data receiving state sent by the network device, wherein the polling request comprises control information: reporting the FPB through a PAN message, reporting the NPB through a packet data downlink ACK/NACK message, or reporting the channel quality report that comprises an NPB through packet downlink data; and
reporting, according to the control information, the downlink data receiving state to the network device.

Another polling method provided in an embodiment of the present invention includes:
receiving a polling request sent by the network device, wherein the polling request comprises control information on the start location: reporting the downlink data receiving state through FPB or NPB; and
sending an FPB or NPB to the network device through the reporting mode of a PAN message or a packet data downlink ACK/NACK message according to the control information on the start location, or reporting a channel quality report that comprises an NPB through packet downlink data.

In an embodiment of the present invention, the network device polls the mobile terminal and controls the mobile terminal to report the data block receiving state through a PAN message. Meanwhile, another option is reserved, namely, the network device may require the mobile terminal to report the downlink data receiving state through a packet data downlink ACK/NACK message that carries an NPB. Therefore, the technical solution under the present invention works properly in the case of both great windows and small windows, and provides higher flexibility and higher efficiency of utilizing the air interface as against the prior art.

### BRIEF DESCRIPTION OF THE DRAWINGS

Figure 1 shows an RLC data block in an embodiment of the present invention;

Figure 2 is a polling flowchart in an embodiment of the present invention;

Figure 3 shows a PAN radio block in an embodiment of the present invention;

Figure 4 is a flowchart of a polling method in an embodiment of the present invention; and

Figure 5 shows a structure of a polling system in an embodiment of the present invention.

### DETAILED DESCRIPTION

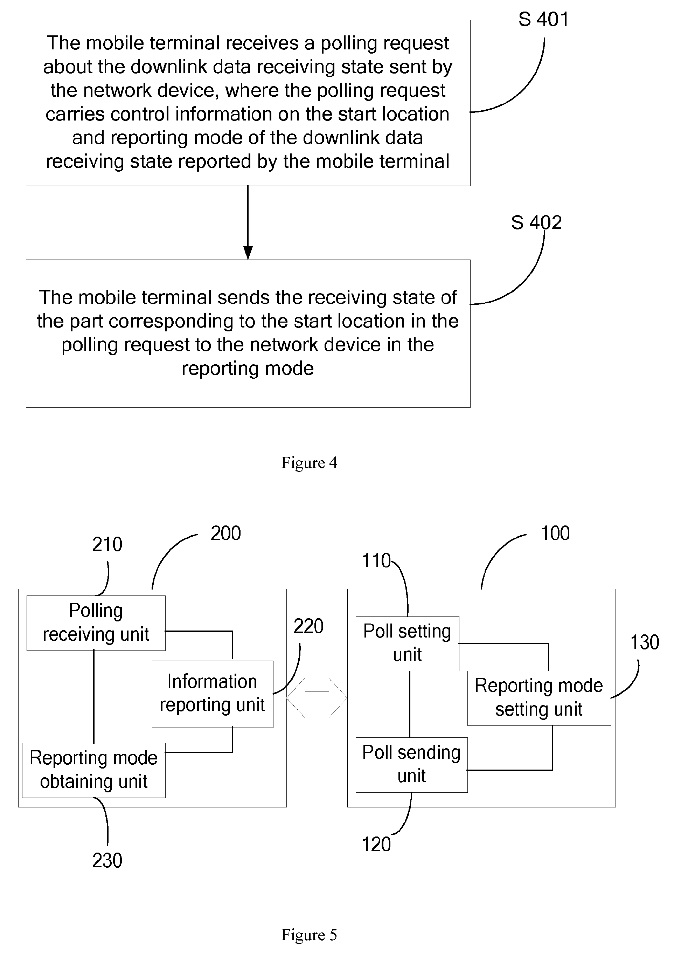

As shown in Figure 4, a polling method provided in an embodiment of the present invention includes:

Step s401: a mobile terminal receives a polling request about the downlink data receiving state sent by a network device, wherein the polling request has control information for instructing the mobile terminal a start location and a reporting mode of a downlink data receiving state to be reported by the mobile terminal.

The reporting mode may be: reporting through a packet data downlink ACK/NACK message or reporting through a PAN message. The mode of the network device sending a polling request may be that the network device sends an RLC/MAC data block to the mobile terminal, and the header of the RLC/MAC data block comprises the polling request.

Step s402: according to the reporting mode required by the network device, for example, reporting through a packet data downlink ACK/NACK (EGPRS Downlink ACK/NACK) message or a PAN message, the mobile terminal reports the receiving state of the downlink data required by the network device to the network device. If the network device specifies the start location of the information window to be reported, the mobile terminal may decide, either according to the operation state of the mobile terminal or according to the reporting indication in the reporting mode option required in the polling, whether to use an EGPRS Downlink ACK/NACK message or PAN message to report the FPB or NPB. When the mobile device obtains the PAN reporting mode, the reporting mode may be set in the RRBP field of the RLC/MAC data block or in the ES/P field of the RLC/MAC data block header.

When the length of the receiving window of the mobile device is greater than the length of the reporting message, the state information of the receiving window needs to be reported in segments, which may include reporting through an FPB and an NPB. When the network device sends the first poll to the mobile terminal, the network device instructs the mobile terminal to report the FPB through a PAN message or packet data downlink ACK/NACK message. Afterward, the network device sends a poll request to the mobile terminal again, instructing the mobile terminal to report the NPB through a PAN message or packet data downlink ACK/NACK message, and so on, until the RLC data block state of the whole receiving window is received. In this way, the network device knows whether the previously sent RLC data block is received by the mobile terminal correctly, and updates the sending window accordingly. If the RLC data block is received correctly, the RLC data block is identified as the correctly received (ACK) state. If the RLC data block is received incorrectly or lost, the RLC data block is identified as the incorrectly received (NACK) state. If no acknowledgement is received, the "pending acknowledgement" state maintains. After the sending window is updated, the window slides to the first unacknowledged RLC data block. The fast ACK/NACK mode may be implemented through the PAN technique known in the art.

The embodiments of the present invention are further described below by reference to specific examples, wherein the network device may be a base station or Radio Network Controller (RNC), and the mobile terminal may be an MS or other mobile access devices.

In the first embodiment of the present invention, the original polling mechanism keeps unchanged, and the ES/P invalid resource field is used together with the RRBP field to indicate reporting the FPB through a PAN message.

The network device sends RLC/MAC data blocks to the mobile terminal continuously, and the PCU in the network device sends a polling request about feedback of the downlink data receiving state to the mobile terminal at a certain interval, wherein the polling request is generally included in the RLC data block, i.e. the polling request is set in the ES/P field of the header of the downlink RLC/MAC data block (as shown in Figure 1). The ES/P field includes 2 bits, the meanings of which are shown in Table 4.

**Table 4**

| ES/P | Feedback request description (poll) |
|---|---|
| 00 | Meaningless (the RRBP field is invalid) |
| 01 | The EGPRS PACKET DOWNLINK ACK/NACK message carries an FPB. If there is any free space left, the message comprises a measurement report. |
| 10 | The EGPRS PACKET DOWNLINK ACK/NACK message carries an NPB. If there is any free space left, the message comprises a measurement report. |
| 11 | The EGPRS PACKET DOWNLINK ACK/NACK message carries a channel quality report. If there is any free space left, the message comprises an NPB. |

In Table 4, if the value of ES/P is "00", it is meaningless and represents that the RRBP field is invalid; if the value of ES/P is "01", it indicates that mobile terminal should return an EGPRS PACKET DOWNLINK ACK/NACK message which includes an FPB and further includes a measurement report if there is any free space left; if the value of ES/P is "10", it indicates that the mobile terminal should return an EGPRS PACKET DOWNLINK ACK/NACK message which includes an NPB and further includes a measurement report if there is any free space left; if the value of ES/P is "11", it indicates that the mobile terminal should return an EGPRS PACKET DOWNLINK ACK/NACK message which includes a channel quality measurement report and further includes an NPB if there is any free space left.

The foregoing functions are same as those known in the prior art. In addition, the RRBP field in the RLC data block header is used to indicate the PAN-type reporting. If the value of ES/P is "00", then the RRBP field is invalid and the "1" bit in this field may be used to indicate PAN polling. The meanings of the RRBP field are shown in Table 5.

**Table 5**

| bits 1 | RRPB (ES/P=00) |
|---|---|
| 0 | No poll (no polling request) |
| 1 | Poll for PAN type FPB (polling request for PAN-type FPB) |

On the basis of Table 4, the invalid field "00" of ES/P can be combined with the RRPB field so as to indicate that the FPB is reported through the PAN type. For example, in Table 5, if bit 1 of RRBP field is specified to be "0", it indicates no polling; if bit 1 is specified to be "1", it indicates that the mobile terminal reports the FPB through a PAN message. Therefore, compared with Table 1 and Table 3, there are several advantages: the FPB is reported through an ACK/NACK message, the NPB is reported through an ACK/NACK message, and the FPB is reported through a PAN message. For example, after receiving a polling request of such a type, the network reserves fixed resources, such as the resources after 8 or 9 frames, for the MS. In this embodiment, the mobile terminal may report the FPB (when the ES/P is 00 and bit 1 of RRBP is 1) through a PAN message (the data block comprises an ACK/NACK); or report the FPB (when ES/P is 01) through a packet data downlink ACK/NACK message; or report the NPB (when ES/P is 10) through a packet data downlink ACK/NACK message; or report the channel quality report that carries an NPB (when ES/P is 11) through packet downlink data.

Essentially this method combines the two bits of ES/P with the one bit of RRBP so as to have a 3-bit information field, which, by removing those meaningless options, can indicate four polling types: reporting the FPB through a PAN message (the data block comprises an ACK/NACK); or reporting the FPB through a packet data downlink ACK/NACK message; reporting the NPB through a packet data downlink ACK/NACK message; or reporting the channel quality report that comprises an NPB through packet downlink data. Each polling type may use at most two reaction times. That is, among all options indicated by the control information, each polling type may have at most two options except the meaningless options.

In the second embodiment of the present invention, the network device points out whether the location of the receiving state bitmap to be obtained is FPB or NPB, while the mobile terminal decides whether FPB/NPB are to be reported by a traditional packet downlink ACK/NACK message or PAN message.

The network device sends RLC data blocks to the mobile terminal, and the PCU in the network device sends a polling request for the downlink data receiving state to the mobile terminal at a certain interval, wherein the polling request is generally included in the RLC data block, i.e. the polling request is set in the ES/P field of the header of the downlink RLC data block (as shown in Figure 1). The ES/P field includes 2 bits, and its meanings are shown in Table 6.

**Table 6**

| ES/P | Feedback request description (poll) |
|---|---|
| 00 | Meaningless (the RRBP field is invalid) |
| 01 | FPB - Based on the actual conditions, the MS decides whether to report through an EGPRS PACKET DOWNLINK ACK/NACK message or PAN |
| 10 | NPB - Based on the actual conditions, the MS decides whether to report through an EGPRS PACKET DOWNLINK ACK/NACK message or PAN |
| 11 | The EGPRS PACKET DOWNLINK ACK/NACK message comprises a channel quality report. If there is any free space left, the message comprises an NPB. |

In Table 6, if the value of ES/P is "00", it is meaningless and represents that the RRBP field is invalid. If the value of ES/P is "01", the network device indicates that the window to be required is FPB, and according to the operation conditions the mobile terminal should return an EGPRS PACKET DOWNLINK ACK/NACK message or PAN message to report an FPB. If the value of ES/P is "10", the network device indicates that the window to be obtained is NPB, and according to the operation conditions the mobile terminal should return an EGPRS PACKET DOWNLINK ACK/NACK message or PAN message to report an NPB. If the value of ES/P is "11", the network device indicates that the mobile terminal shall return an EGPRS PACKET DOWNLINK ACK/NACK message with a channel quality measurement report enclosed therein. If there is any free space left, an NPB is further enclosed therein.

If the length of the receiving window and sending window of the network device is greater than the message's length, the network device indicates that the mobile terminal shall return an NPB after returning an FPB. If the window's length is less than the message's length, the network device indicates that the mobile terminal needs only to return an FPB. In order to improve the data transmission efficiency, the mobile terminal may decide, according to such needs as the size of the bitmap, whether to report by a traditional ACK/NACK message or by a fast ACK/NACK message.

In this embodiment, the mobile terminal may: report the FPB through a PAN message (the data block includes an ACK/NACK); or report the FPB through a packet data downlink ACK/NACK message; or report the NPB through a packet data downlink ACK/NACK message; or report the NPB through a PAN message; or report the channel quality report that includes an NPB through packet downlink data.

In the third embodiment of the present invention, the FPB is reported through a PAN message, and the NPB is reported through a packet downlink ACK/NACK message known in the art. The network device sends RLC data blocks to the mobile terminal, and the PCU in the network device continue sending a polling request for the downlink data receiving state to the mobile terminal at a certain interval, wherein the polling request is generally included in the RLC data block, i.e. the polling request is set in the ES/P field of the header of the downlink RLC data block (as shown in Figure 1). The ES/P field includes 2 bits, and its meanings are shown in Table 7.

**Table 7**

| ES/P | Feedback request description (poll) |
|---|---|
| 00 | Meaningless (the RRBP field is invalid) |
| 01 | The EGPRS PACKET DOWNLINK ACK/NACK message carries an NPB. If there is any free space left, the message comprises a measurement report. |
| 10 | Polling the PAN-type FPB |
| 11 | The EGPRS PACKET DOWNLINK ACK/NACK message comprises a channel quality report. If there is any free space left, the message comprises an NPB. |

In Table 7, if the value of ES/P is "00", it is meaningless and represents that the RRBP field is invalid. If the value of ES/P is "01", it indicates that mobile terminal shall return an EGPRS PACKET DOWNLINK ACK/NACK message with an FPB enclosed therein and, if there is any free space left in the message with a measurement report further enclosed therein. If the value of ES/P is "10", it indicates that the mobile terminal shall report the FPB through polling PAN. If the value of ES/P is "11", it **indicates that the mobile** terminal shall return an EGPRS PACKET DOWNLINK ACK/NACK message with a channel quality measurement report enclosed therein and, if there is any free space left in the message, with an NPB further enclosed therein.

In this embodiment, compared with Table 3, the mobile terminal may indicate three polling types (namely, two polling types for reporting the NPB and one for reporting the FPB), including: reporting the FPB through a PAN message (when the ES/P is 10); or reporting the NPB through a packet data downlink ACK/NACK message (when ES/P is 01); or reporting the channel quality report that comprises an NPB through packet downlink data (when ES/P is 11).

This embodiment may also refer to the method disclosed in the first embodiment, which, by taking both ES/P and RRBP into account, adds a polling type by using the invalid resources of the RRBP. The additional polling type is: reporting the FPB through a packet data downlink ACK/NACK message. Except the meaningless options, at most two reaction times are indicated for each polling type. That is, in all options indicated by the control information, each polling type can have at most two options except the meaningless options.

As shown in Figure 5, a polling system provided in this embodiment includes a network device 100 and a mobile terminal 200.

The network device 100 is adapted to send a polling request of feeding back the downlink data receiving state to the mobile terminal 200. The polling request carries control information indicative of the start location and reporting mode. The mobile terminal 200 is adapted to receive the polling request of downlink receiving state from the network device 100, and report an FPB or NPB to the network device 100 through an EGPRS PACKET DOWNLINKACK/NACK message or PAN message.

The network device 100 includes a poll setting unit 110, a poll sending unit 120 and a reporting mode setting unit 130.

The poll setting unit 110is adapted to set the polling request of the downlink data receiving state. The polling request includes the control information on the reporting location and reporting mode. The poll sending unit 120 is adapted to send a polling request to the mobile terminal. The reporting mode setting unit 130 is adapted to determine the reporting mode to be used by the mobile device in the polling request delivered by the network.

The mobile terminal 200 includes a poll receiving unit 210, an information reporting unit 220 and a reporting mode obtaining unit 230.

The poll receiving unit 210is adapted to receive the polling request that feeds back the downlink data receiving state from a network.

The information reporting unit 220 is adapted to report the FPB or NPB to the network device.

The reporting mode obtaining unit 230 is adapted to obtain the reporting mode from the polling request, or determine the reporting mode according to the running state of the mobile terminal, wherein the reporting mode may be reporting through a traditional EGPRS Downlink ACK/NACK message or PAN message.

In the embodiments, the network device may control the mobile terminal to report through a PAN message. Meanwhile, another option is reserved, namely, the mobile terminal may report the downlink data receiving state through a packet data downlink ACK/NACK message that includes an NPB. Therefore, compared to the techniques known in the art, the technical solution provided by the embodiments of the present invention works properly in the case of both great windows and small windows, and provides higher flexibility and higher efficiency in utilizing the radio interface.

Through the foregoing embodiments, it is understandable to those skilled in the art that the embodiments of the present invention may be implemented through software in addition to a general hardware platform as required or through hardware only. However, in most cases, software in addition to a general hardware platform is preferred. Based on such understandings, the technical solution under the present invention or contributions to the prior art can be embodied by software products. The software products are stored in a storage medium and incorporate several instructions to instruct a computer device, for example, a PC, server, or network device, to execute the method provided in the above-mentioned embodiments of the present invention.

Although the invention is described herein as some exemplary embodiments, the invention is not limited to such embodiments. It is apparent that those skilled in the art can make various modifications and variations to the invention. Thus, the invention is not intended to be limited to the embodiments shown herein but is intended to cover the modifications and variations provided that they fall in the scope of protection defined by the following claims or their equivalents.

## Claims

1. A polling method, comprising:
receiving a polling request sent by a network device, the polling request comprising control information for instructing a mobile terminal a start location and a reporting mode of a downlink data receiving state to be reported to the network device by the mobile terminal, wherein the reporting mode comprises: reporting through a packet data downlink positive acknowledgement (ACK)/negative acknowledgement (NACK) message or reporting through a Piggybacked ACK/NACK (PAN) message; and
sending, according to the report mode indicated in the polling request, the network device a downlink data receiving state corresponding to the start location indicated in the polling request.

2. The polling method of claim 1, wherein the start location indicated in the polling request comprises a First Partial Bitmap (FPB) or Next Partial Bitmap (NPB).

3. The polling method of claim 2, wherein receiving the polling request sent by the network device comprises:
receiving a Radio Link Control (RLC)/Media Access Control (MAC) data block sent by the network device, wherein the RLC/MAC data block comprises the polling request for the downlink data receiving state.

4. The polling method of claim 3, wherein the reporting mode of reporting through a PAN message is set in a Relative Reserved Block Period (RRBP) field of a header of the RLC/MAC data block.

5. The polling method of claim 3, wherein the reporting mode is set in an ES/P field of the header of the RLC/MAC data block.

6. The polling method of claim 1, wherein according to the report mode, sending to the network device the downlink data receiving state corresponding to the start location indicated in the polling request comprises:
reporting a First Partial Bitmap (FPB) through the PAN message or reporting a Next Partial Bitmap (NPB) through the packet data downlink ACK/NACK message; or
reporting a First Partial Bitmap (FPB) through the packet data downlink ACK/NACK message or reporting a Next Partial Bitmap (NPB) through the PAN message; or
reporting a First Partial Bitmap (FPB) through the PAN message or reporting a Next Partial Bitmap (NPB) through the PAN message.

7. A polling system, comprising:
a network device, adapted to send a polling request to a mobile terminal, the polling request comprising control information for instructing a mobile terminal a start location and a reporting mode of a downlink data receiving state to be reported to the network device by the mobile terminal, wherein the reporting mode comprises: reporting through a packet data downlink positive acknowledgement (ACK)/negative acknowledgement (NACK) message or reporting through a Piggyback ACK/NACK (PAN) message; and
a mobile terminal, adapted to send, according to the report mode indicated in the polling request, the network device a downlink data receiving state corresponding to the start location indictaed in the polling request.

8. The polling system of claim 7, wherein the network device comprises:
a poll setting unit, adapted to set the polling request of the downlink data receiving state, wherein the polling request comprises the control information; and
a poll sending unit, adapted to send the polling request to the mobile terminal.

9. The polling system of claim 7, wherein the network device further comprises:
a reporting mode setting unit, adapted to:
determine whether the mobile terminal reports a First Partial Bitmap (FPB) through the PAN message or reports a Next Partial Bitmap (NPB) through the packet data downlink ACK/NACK message; or
determine whether the mobile terminal reports a First Partial Bitmap (FPB) through the packet data downlink ACK/NACK message or reports a Next Partial Bitmap (NPB) through the PAN message; or
determine whether the mobile terminal reports a First Partial Bitmap (FPB) through the PAN message or reports a Next Partial Bitmap (NPB) through the PAN message.

10. The polling system of claim 7, wherein the mobile terminal comprises:
a poll receiving unit, adapted to receive the polling request of the downlink data receiving state from a network; and
an information reporting unit, adapted to send, according to the report mode indicated in the polling request, the network device the downlink data receiving state corresponding to the start location indicated in the polling request.

11. The polling system of claim 10, wherein the mobile terminal further comprises:
a reporting mode obtaining unit, adapted to:
obtain the reporting mode from the polling request of the downlink data receiving state; or
determine the reporting mode according to operation conditions of the mobile terminal.

12. A network device, comprising:
a poll setting unit, adapted to set a polling request of a downlink data receiving state, the polling request comprising control information for instructing a mobile terminal a start location and a reporting mode of the downlink data receiving state to be reported to the network device by a mobile terminal; and
a poll sending unit, adapted to send the polling request to the mobile terminal.

13. The network device of claim 12, further comprising:
a reporting mode setting unit, adapted to:
determine whether the mobile terminal reports a First Partial Bitmap (FPB) through a Piggybacked ACK/NACK (PAN) message or reports a Next Partial Bitmap (NPB) through a packet data downlink positive acknowledgement (ACK)/negative acknowledgement (NACK) message; or
determine whether the mobile terminal reports a First Partial Bitmap (FPB) through a packet data downlink positive acknowledgement (ACK)/negative acknowledgement (NACK) message or reports a Next Partial Bitmap (NPB) through a Piggybacked ACK/NACK (PAN) message; or
determine whether the mobile terminal reports a First Partial Bitmap (FPB) through a Piggybacked ACK/NACK (PAN) message or reports a Next Partial Bitmap (NPB) through a PAN message.

14. A mobile terminal, comprising:
a poll receiving unit, adapted to receive a polling request of a downlink data receiving state from a network device; and
an information reporting unit, adapted to send, according to a report mode indicated in the polling request, the network device a downlink data receiving state corresponding to a start location indicated in the polling request.

15. The mobile terminal of claim 14, further comprising:
a reporting mode obtaining unit adapted to:
obtain the reporting mode from the polling request of the downlink data receiving state; or
determine the reporting mode according to operation conditions of the mobile terminal.

16. A polling method, comprising:
receiving a polling request sent by a network device, wherein the polling request comprises control information including: reporting a First Partial Bitmap (FPB) through a Piggybacked ACK/NACK (PAN) message; or reporting the FPB through a packet data downlink positive acknowledgement ACK/negative acknowledgement (NACK) message; or reporting a Next Partial Bitmap (NPB) through the packet data downlink ACK/NACK message; or reporting a channel quality report that comprises an NPB through packet downlink data; and
reporting, according to the control information, a downlink data receiving state to the network device.

17. The method of claim 16, wherein:
the control information in the polling request comprises a start location and a reporting mode,
the start location comprising an FPB or NPB, and
the reporting mode comprising: reporting through a packet data downlink ACK/NACK message, or reporting through a PAN message.

18. The polling method of claims 16-17, wherein the control information in the polling request is set through an ES/P field and a Relative Reserved Block Period (RRBP) field in a Radio Link Control (RLC)/Media Access Control (MAC) block header.

19. The polling method of claim 16, claim 17 or claim 18, wherein the control information indicates reaction time of each polling request type, and the control information indicates at most two reaction times for each polling request type.

20. The polling method of claim 17, wherein the control information of reporting the FPB through the PAN message is set in a Relative Reserved Block Period (RRBP) field of a header of a Radio Link Control (RLC)/Media Access Control (MAC) data block.

21. The polling method of claim 20, wherein the control information of reporting the FPB through the PAN message is set in an ES/P field of the header of the RLC/MAC data block.

22. A polling method, comprising:
receiving a polling request sent by a network device, the polling request comprising control information for instructing a mobile terminal a start location, wherein the start location comprises reporting a downlink data receiving state through a First Partial Bitmap (FPB) or Next Partial Bitmap (NPB); and
according to the control information of the start location, determining to send the FPB or NPB to the network device through a reporting mode of a Piggybacked ACK/NACK (PAN) message or a packet data downlink positive acknowledgement (ACK)/negative acknowledgement (NACK) message, or determining to report a channel quality report that comprises the NPB through packet downlink data.

23. The polling method of claim 22, wherein the start location is set in an ES/P field of a header of a Radio Link Control (RLC)/Media Access Control (MAC) data block in the polling request.

24. The polling method of claim 23, wherein the start location is set in a Relative Reserved Block Period (RRBP) field of the header of the RLC/MAC data block in the polling request.
